# EUROPEAN PATENT SPECIFICATION

(11) **EP 4 443 103 B1**
(45) Date of publication and mention of the grant of the patent: **05.11.2025**
(21) Application number: 24167181.7
(22) Date of filing: 28.03.2024
(51) Int. Cl.: G01B 11/06, G01B 11/10, G01B 11/12, G01B 11/27, B07C 5/12, B07C 5/34, G01N 21/90

(54) **OPTICAL METHOD FOR NONDESTRUCTIVE MEASUREMENT OF THE THICKNESS OF A HOLLOW CONTAINER**
OPTISCHES VERFAHREN ZUR ZERSTÖRUNGSFREIEN MESSUNG DER DICKE EINES HOHLEN BEHÄLTERS
MÉTHODE OPTIQUE POUR LA MESURE NON DESTRUCTIVE DE L'ÉPAISSEUR D'UN CONTENANT CREUX

(30) Priority: 04.04.2023 IT 202300006597
(43) Date of publication of application: 09.10.2024
(73) Proprietor: Vetreria Etrusca S.p.A., 50056 Montelupo Fiorentino (FI) (IT)
(72) Inventor: FABBRONI, Alexandro Maximiliano, 50056 Montelupo Fiorentino FI (IT); VANNACCI, Enrico, 51100 Pistoia (IT)
(74) Representative: Pietri, Simona

(56) References cited:
- IT-A1- 202100 010 865
- SU-A1- 147 327
- US-B2- 7 780 898

## Description

### Field of the invention

The present invention relates in general to the field of industrial quality control processes, and more specifically refers to a method for measuring the thickness of a hollow glass container such as a bottle, vial or the like.

### Background of the Invention

The term "hollow glass" is generally used to refer to the curved glass that forms hollow glass containers such as bottles, so as to distinguish the type of material and its production from that of flat glass used to make windows or other construction articles.

Containers made of hollow glass are notoriously highly appreciated for packaging food due to their transparency and safety, but also due to the fact that they preserve food and beverages better than containers made of other materials such as plastic.

Even in the cosmetic and pharmaceutical sectors, hollow glass containers are the most appreciated for aesthetic and technical reasons, mainly related to the material chemical inertness and guarantee of sterility.

Furthermore, in recent years, due to an increase in environmental awareness and the need to recycle packaging, hollow glass containers have been increasingly required as they can be recycled almost for a virtually infinite number of times.

In industrial production, hollow glass containers are obtained by a process of blowing the molten glass mass and moulding in special moulds. After moulding, the hollow glass container undergoes annealing to eliminate strains inside the glass, making the container gradually reach room temperature in a controlled manner. At this point, the individual articles obtained are subjected to a series of checks on their characteristics, ranging from the size and shape of the container to the calibration of the opening, discarding and returning to casting all those pieces that do not meet predetermined parameters.

It is therefore clear that a dimensional check is important to ensure the quality of the manufactured product, and various optical measurement techniques have been implemented over the years by various manufacturers and control system constructors to check the consistency of the dimensional characteristics of these structures.

With particular reference to the glass thickness measurement, the methods being currently used are either destructive or non-destructive.

Destructive techniques provide sample extraction of the article on the production line and its subsequent cutting. The cut article can then be easily measured using known techniques, such as a contact measurement with a calliper, etc.

It is clear that these techniques imply the destruction of some samples and are therefore rather expensive, as well as not being completely reliable since sample extraction implies that an overall assessment on all manufactured articles is only made on a statistical basis.

Non-destructive measurement techniques are therefore generally preferred.

Non-destructive techniques are usually divided into mechanical, X-ray or optical measurements.

Mechanical measurement methods are generally used to measure the outer and inner dimensions of the bottle neck; these methods can also be used in combination with optical techniques to detect the displacement of certain mechanical components inserted in the bottle.

Optical techniques of various kinds have been developed over the years to measure glass thickness; these techniques involve point or spot measurements of the glass itself.

German Publication DE102009025815 describes a technique that consists in using a chromatically encoded optical source and receiving light reflected from the outer and inner faces of the bottle with a sensor capable of analysing the wavelengths received, determining the thickness based on these.

Another non-contact optical technique for measuring the thickness is described, for example, in the US Publication US2014029019; this text describes a device for measuring the thickness of the glass wall at several measuring points, distributed over an inspection zone in an overlapping manner according to a certain height of the container in relation to the central axis.

Further, in EP0320139, collimated sources such as laser diodes are used and the thickness is measured based on the spatial separation obtained on a linear sensor being received. Measurement methods using a collimated laser beam are also described in Publications US2015/0276380 and JP57142505.

Other examples of measurement methods are described in Publications US1016884, JP11132730, or in publications IT202100010865, SU147327 and US7780898. In general, these known methods are not fully satisfactory for various reasons; for example, they are not suitable for all types of glass, coloured or not. Or they simply carry out a quality check on the item rather than on the thickness. Some also require high measurement and detection times as, in order to make precise measurements or with a certain degree of accuracy, it is necessary to repeat the measurement at several points of the article. Further, they are not suitable for articles with a varying thickness.

### Summary of the invention

Inventors have now found a method for effectively measuring the thickness in hollow glass articles such as bottles, vials and the like, including those made of coloured glass.

The object of the method according to the invention is indeed to effectively measure the thickness of an article made of hollow glass quickly and with high accuracy.

Other important features of the method according to the invention are given in the following detailed description, also referring to the figures.

### Brief description of the drawings

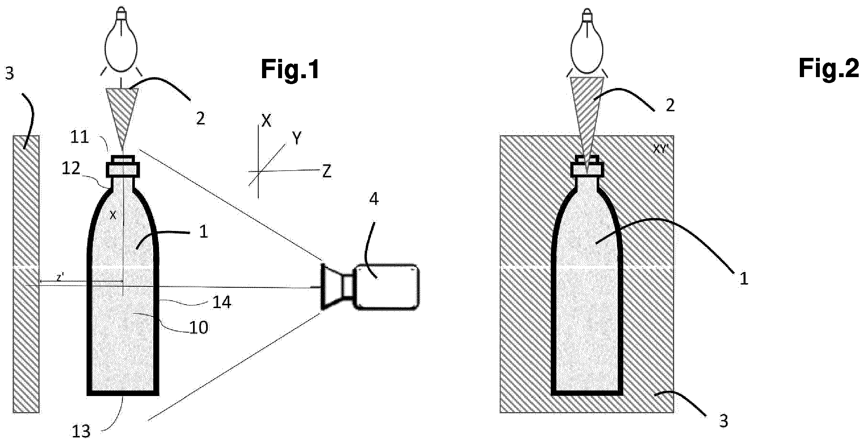

- Figure 1 is a schematic view of a system for measuring the thickness of an article made of hollow glass with the method according to the invention;
- Figure 2 is a schematic front view of the system of Figure 1;
- Figure 3 schematically shows the method for detecting the thickness according to the invention;
- Figure 4 shows an experimental example of the application of the thickness measuring method;
- Figure 5 shows an example of an article production line equipped to implement the method according to the invention;
- Figure 6 shows an embodiment with bottle rotation means, in which the thickness is measured over the entire circumference of the bottle;
- Figure 7 shows an embodiment variant of a bottle measuring station with three image acquisition means and as many external two-dimensional light sources
- Figures 8 and 9 show the steps in a variant of the method for measuring the thickness of part of the hollow glass article with a varying thickness, such as the neck of a bottle.

### Detailed description of the invention

In the context of the present invention, the term "hollow glass article" means any article made of hollow or curved glass, such as containers. Examples of hollow glass articles are bottles, vials, vases, jars, jugs, glasses, goblets, etc.

In the figures, the article is represented in the form of a bottle. It identifies a containment compartment 10 delimited by a glass wall 1 of a thickness S to be measured, an opening 11 for access to this compartment, a neck 12 which is represented by the portion of the container proximal to the opening and a bottom 13, opposite the opening 11.

The bottle also has a body 14, which is represented by the portion of the container that continues the neck and is proximal to the bottom.

The bottle has a development along an X-axis, which is a vertical axis in the images shown.

For the purposes of this description, in addition to the X-axis, a Y-axis and a Z-axis, perpendicular to X and defining a Cartesian tern therewith, are also indicated.

Further, the method according to the invention makes it possible to assess the bottle thickness measured in the plane transverse to the X-axis.

The method for measuring the thickness in a hollow glass article provides to have an initial source for illuminating the bottle 2, which in the following text will be referred to as "internal" since this source is adapted to emit light radiation that illuminates the inside of the bottle through the opening 11 and/or through the bottom 13.

The images show the example with an internal illumination source placed at the opening.

The inner radiation source 2 is chosen such that at least part of the optical emission spectrum overlaps the component of the spectrum transmitted by glass.

Substantially, the inner radiation source 2 is chosen such as to emit a radiation with a spectrum that can pass through the glass.

Further, it is not necessary that the radiation spectrum of the source and the transmission spectrum of the glass exactly coincide, but it is sufficient that the two at least partially overlap. Depending on the characteristics of the glass and the spectral portion overlapping with the emission spectrum of the source, an attenuation factor will be derived accordingly.

The inner radiation source 2 is substantially one-dimensional where the term one-dimensional means such that it emits a light beam that is substantially developed around the X-axis.

The inner radiation source 2 can be a generic radiation source such as an incandescent or halogen lamp, or light-emitting diodes of either incoherent light (LED) or coherent light (LASER) can be used.

Further, the method also provides to have means emitting or reflecting light radiation outside the bottle 3.

Such means are at least a two-dimensional illumination source, i.e. extended in a longitudinal plane XY' relative to the bottle, external thereto, at a certain distance z' (on the Z axis) from its central axis X to illuminate the bottle in its entirety.

The external two-dimensional source can emit any type of light radiation, as it is not required to pass through the glass.

The external two-dimensional source can be either uniformly diffusive or collimated.

In a preferred embodiment, the external light source must emit a light radiation with a lower intensity than the internal light source, for the reasons that will be explained below.

Alternatively, such means can be represented by a uniformly reflective panel capable of reacting to the light emitted directly from the internal source.

The method also provides to have image detection means 4 placed on the opposite side of the article relative to the external illumination source 3. For example, but not limitatively, such means can be at least a video camera.

The image detection means 4 are such as to acquire at least one image of the article in a longitudinal plane.

Further, the method also comprises the passage of filling the compartment 10 with a diffusive medium. This diffusive medium has the task of uniformly diffusing the light radiation emitted by the internal source, propagating in all directions, so as to ensure uniform illumination of the inner compartment of the bottle being examined. Preferably, the diffusive medium must have sufficient absorbance to allow light to propagate inside the bottle but at the same time have sufficient density to make the contribution to the final image of the back wall of the bottle negligible. In fact, in the present invention, the light radiation is inserted from the bottom or opening at the mouth of the bottle and the contribution in absorption of the diffusing medium inevitably causes a dimming of the light intensity along the X-axis of the bottle.

This diffusive medium is in the form of a gas or aerosol.

Preferably, the diffusive medium must not leave any residue inside the bottle.

Examples of diffusive media are distilled water vapour or dense mists (obtained through the use of inert gases such as carbon dioxide); aerosols obtained through the vaporisation of food additives such as propylene glycol or glycerine in a distilled water solution can also be used in other embodiments.

The use of an aerosol is a preferred solution; this solution makes it possible to improve the optimisation of the scattering process of incident radiation, which, due to the presence of innumerable scattering centres, is continuously deflected in a direction other than that of incidence. These multiple diffusions contribute to the uniform redistribution of light radiation within the bottle.

The absorption contribution of the diffusing medium, which appears as an attenuation of the light intensity deep down in the bottle, can be limited by appropriately choosing the optical density of the diffusing medium itself and by using radiation sources from the neck of the bottle and/or from the bottom thereof that are completely independent and which may be controlled in intensity. It is also possible, in some embodiments, to widen the dynamic range of the image in order to equalise the brightness levels along the X-axis to compensate for the decrease in intensity in depth of the light in the inner area filled with the diffusive medium.

As mentioned above, the internal optical source 2 can be a generic radiation source or light-emitting diodes of either incoherent light (LED) or coherent light (LASER) can be used. If diodes, which are inherently narrow-band, are used, a specific operating wavelength should be chosen that can be scattered by the diffusing medium placed inside the bottle.

The image acquisition means 4 must be positioned in such a way as to dominantly receive the portion of isotropic radiation scattered by the diffusing medium inside the bottle, rather than the direct radiation emitted by the internal source 2.

In a preferred solution, the internal source 2 emits radiation in a direction perpendicular to the framing direction of the video camera; thus, for example, the internal source emits radiation along the X-axis, while the camera frames along the Z-axis.

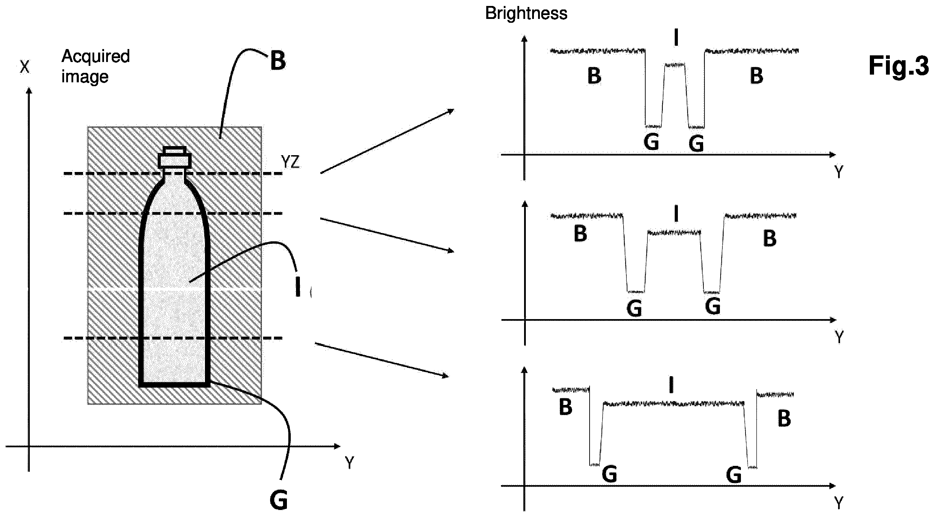

With reference to Figure 3, we can see how the external source has the task of highlighting the edges of the article. The internal source 2, on the other hand, aims to make the bottle compartment a source of uniform radiation at every point.

Thus, while the parts related to the glass give a minimal contribution in brightness, the contribution related to the areas inside the bottle is mainly provided by the isotropic scattering of the radiation injected into the bottle by the internal source.

Once the image of the article has been obtained, it is processed so as to identify different brightness zones. The lowest brightness zones of the image correspond to those of glass (G). The areas B illuminated outside the article are those with the highest brightness, while those (I) related to the inner compartment of the article have an intermediate brightness (figure 3). In other words, the areas with the highest brightness are those referring to the contributions of light radiation outside and inside the bottle while the areas with the lowest brightness correspond to the glass. The areas of dimmed brightness correspond to the inner compartment of the bottle filled with the diffusive medium. By measuring the pixels related to the areas G, the glass thickness is obtained. The pixel size at the depth of the examination, are known factors depending on the resolution of the camera.

Correspondingly, the inner diameter of the article is measured by measuring the pixels related to the intermediate brightness areas.

In other embodiment variants, the zones corresponding to the areas outside the article could have an intermediate brightness, while the internal ones could have a higher brightness. In general, the brightness level of the zones depends on the radiation emitted by the internal and external sources.

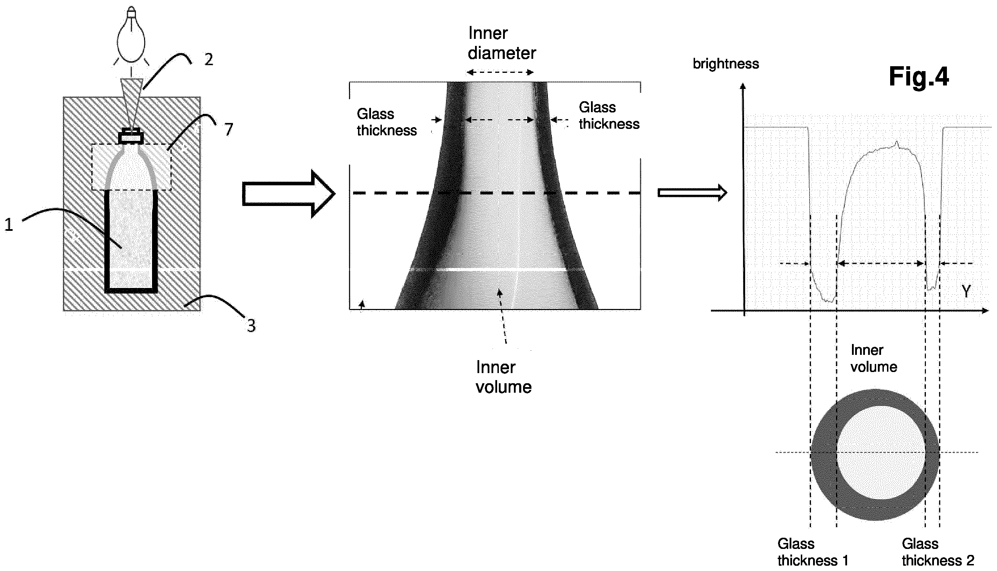

Figure 4 shows a real result related to a bottle with an uneven thickness.

By making the inner volume of the bottle uniformly diffusive, the distortion contribution due to the lens effects of curved walls is minimised. Optical distortions are minimised by the fact that light is emitted from all inner portions of the volume with a uniform distribution.

Further, thanks to the presence of the inner diffusing medium, the light is reflected by the entire inner compartment 10 of the bottle and thus the emitted radiation is only deflected by the glass wall that lies between the diffusing medium and the receiver.

It is preferable to maintain the uniformity of the diffusive medium at the opening of the container by preventing it to escape and at the same time ensuring its internal uniformity, which can be done for example, but not only, by closing the container itself.

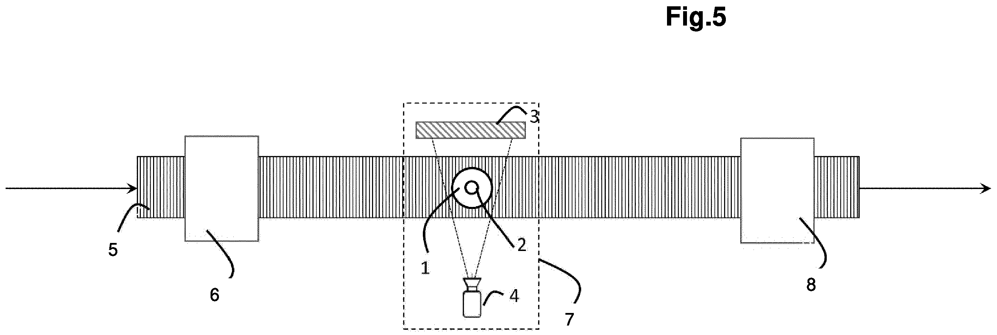

Alternatively, the bottle can be tilted relative to its longitudinal axis so that the opening points downwards.
As shown in Figure 5, the proposed measuring method can be implemented in a production line, that is to say, a line 5 in which the incoming empty article is filled with a diffusive medium at an initial filling station 6 using nozzles and other known instruments. Once the bottle has been filled, analysis can be carried out at a subsequent measuring station 7. A station 8 for the extraction of the diffusive medium can also be provided downstream of the measuring station 7.

The measuring station 7 also comprises the means to implement the described thickness measuring method. Such means comprise, but are not limited to: - the means of emission 3 of two-dimensional light radiation defined on a plane (XY') to illuminate externally the article by highlighting its edges; - the image acquisition means placed beyond the article relative to the two-dimensional emission means, wherein the image acquisition means are such as to acquire an image of the article on the plane (XY') - the means of emission of one-dimensional light radiation 2 placed at a neck and/or a bottom of the article and such as to illuminate the inside of the article. Said means further comprise means of image processing configured to at least carry out the step iv to viii of claim 1.

The technique set forth can be effectively used for measuring the thickness of the bottle glass and can be applied to glass of any colour and shape by choosing appropriate wavelengths of the illuminating radiation.

Further, in a specific embodiment of the invention, it is possible to measure various parts of the container,such as neck or body. For this purpose, several image acquisition systems can be provided, each one intended to take an image of the part to be measured.

In a further embodiment, a bottle rotation system is provided.

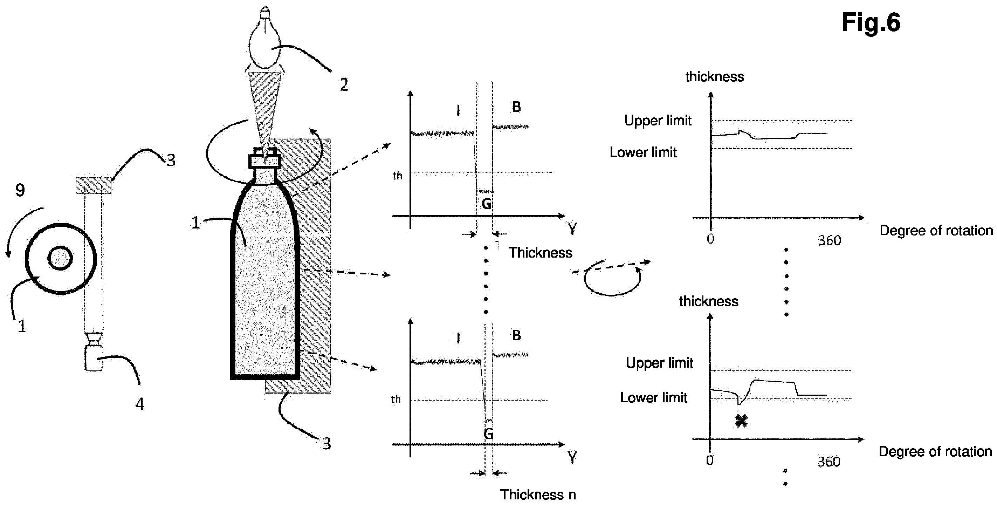

In this respect, reference is made to Figure 6 wherein the method for measuring the thickness according to the invention is schematically shown, where bottle rotation means 9 are implemented (not described in detail). In this case, the method consists in acquiring for different angles of rotation images of the container in a plurality of XY" planes and measuring the thickness for each image on the basis of pixel detection of the zones with the lowest brightness. By comparing the thickness results at a given degree of rotation with limit values (upper and lower limit), it is possible to discard those articles whose results do not fall within the range defined by these limit values.

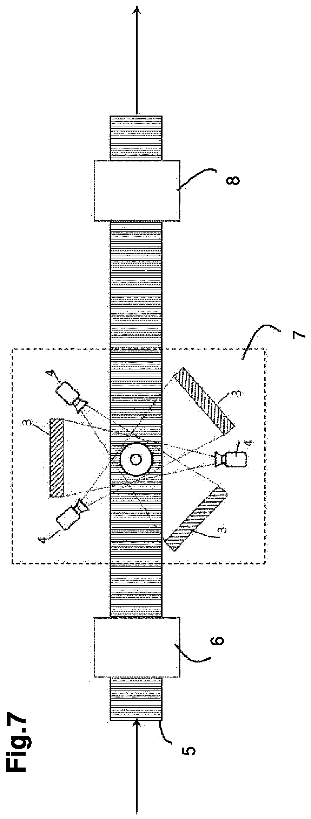

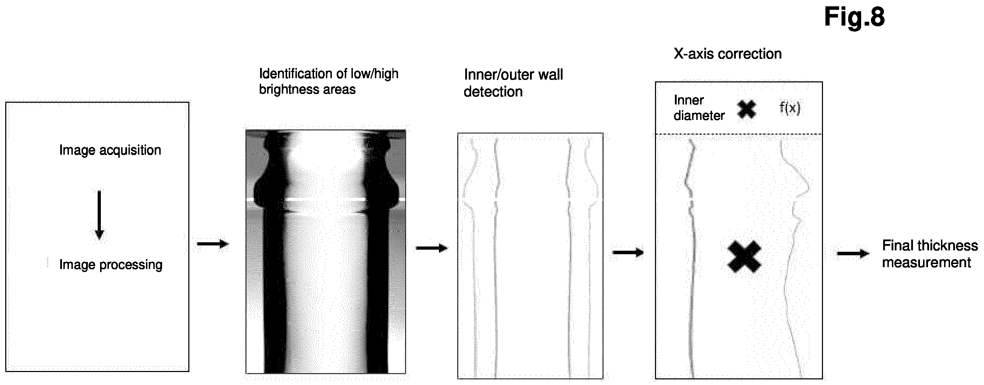

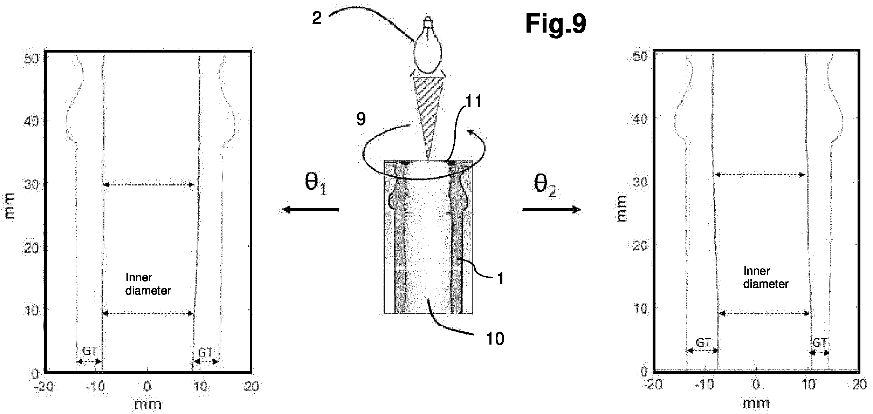

Alternatively, with reference, for example, to Figure 7, there are also configurations wherein there are several cameras facing as many two-dimensional external sources placed in longitudinal planes XY', XY", XY‴.....XYn, arranged at different angles of rotation relative to the X-axis. For example, Figure 7 shows a measuring station configuration in a bottle packaging line in which there are three video cameras and as many external sources. These solutions make it possible to have information on the entire section of the glass by increasing the detection points (as in the example in Figure 7) as an alternative to the bottle rotation option.
Referring now to Figures 8 and 9, a specific embodiment of the method is more specifically described for the detection of the thickness in zones of the article with a varying thickness, such as, in particular, the neck. This embodiment of the method makes it possible in particular to measure the diameter of the neck, which is a particularly important value as it is decisive for the correct sealing of the bottle once in use.
In particular, after the image acquisition, which can be done with a single video camera, with multiple video cameras or with rotation of the article according to specific needs, a step of processing the image is provided. This step provides to expand the dynamic range of the image in order to equalise the brightness levels along the X-axis to compensate for the decrease in intensity in depth of the light in the inner area filled with the diffusive medium.
Measurements of the zones with a different brightness are taken on this processed image, as described above. Once the measurement of the inner diameter is obtained, it is multiplied by a corrective function f(x) which is known for the type of bottle: this passage makes it possible to correct and compensate for the effects on the image that would lead to incorrectly estimate the inner diameter of the neck due to the different paths taken by the light in the variable curvature zones. This step is performed by applying an inverse compensation function to the inner wall measurement, thus taking into account the circular symmetry of the bottle neck and the shape thereof. With the same optical configuration of the system, this function is characteristic of the type of bottle as it depends on the local thickness of the glass and is a correction factor f(x), which is therefore a function of the depth on the X-axis. This correction factor must be multiplied point by point to the measurement of the inner walls, thus making it possible to properly calculate the inner diameter and the actual thickness of the glass for all depths.
As described above, in such zones with a high variability in thickness, such as the neck of the bottle, it is advantageous to process the acquired image to eliminate interferences and thus not only properly detect areas with a different brightness, but also to make a correct measurement.
The step of processing the image can be carried out with image processing means placed on the production line itself or detached from it, said image processing means being in both cases part of the device according to the invention.

The method described in its embodiment variants makes it possible to measure the glass thickness of an article with precision and accuracy.

The method obtains not only the measurement of the thickness of the glass but obviously, as a consequence, also the inner diameter of the article.

The method is applicable on any type of glass article, regardless of the colour or shape.

In this regard, the method described makes it possible to measure the thickness of the glass even of areas with a varying thickness, such as the neck in the case of the bottle, and also, in addition to the thickness of the glass, the inner diameter of these areas. Measuring the inner diameter of the neck in a bottle makes it possible to assess its correct shape and circularity, factors that ensure the cap sealing over time.

The present invention has been described herein with reference to a preferred embodiment. It is to be understood that there may be other embodiments that relate to the same inventive nucleus, all falling within the scope of protection of the claims provided below.

## Claims

1. A method for measuring the thickness of a hollow glass article, wherein said article has a development along a first longitudinal axis (X) and comprises a compartment (10) delimited by a glass wall of a thickness (S) to be measured, an opening (12) for access to said compartment (10) and a bottom (13) opposite said opening, wherein said thickness is assessed along an axis perpendicular to said longitudinal axis (X), said method comprising the steps of:
i. inserting a medium diffusive to the light radiation inside this compartment (10);
ii. emitting substantially one-dimensional light radiation along the axis (X) to illuminate internally said chamber (10) filled with said diffusive medium through a bottom (13) of said article and/or an opening (12) of said article;
iii. emitting a two-dimensional light radiation in a longitudinal plane (XY or XZ) relative to the hollow glass article in order to externally illuminate said article highlighting the edges;
said method comprising the following steps of:
iv. acquiring at least one image in said longitudinal plane (XY or XZ) of said article by means of image acquisition means placed frontally and on the opposite side of said bottle to the direction of emission of said two-dimensional light radiation;
v. on said image to subdivide zones according to their brightness;
vi. identifying these zones on the basis of their brightness, such as at least one zone (G) corresponding to the glass and at least one intermediate zone (I) between two zones (G), corresponding to said compartment (10);
vii. quantifying the number of pixels present in at least one of said zones (G) and (I);
viii. evaluate the size of at least one of these zones based on the number of pixels quantified and knowing the resolution of the acquired image.

2. The method according to claim 1 wherein said one-dimensional light radiation is emitted in a direction substantially perpendicular to the framing direction of said image acquisition means.

3. The method according to claim 1 or 2 wherein said one-dimensional light radiation is generated with light-emitting diodes of incoherent light (LED) or coherent light (LASER).

4. The method according to claim 1 or 2 or 3 wherein said two-dimensional external radiation is either diffuse or collimated.

5. The method according to claim 1 or 2 or 3 wherein said two-dimensional external radiation is radiation emitted by reflection from a reflecting panel of said one-dimensional light radiation.

6. The method according to any of the preceding claims wherein said method further comprises the step of acquiring a plurality of images of the article in as many planes (XY") at different angles of rotation.

7. The method according to claim 6 wherein for each of said plurality of acquired images said method comprises the step of measuring thickness on the basis of detecting pixels of different brightness zones.

8. The method according to claim 7 wherein this method also includes the step of evaluating these values obtained on the basis of a defined range between two limit values and eliminating articles for which values outside this range are detected.

9. The method according to claim 1 wherein, between step (iv) and step (v) is also included:
(iv') image processing
and after step (viii) provide for the steps of:
(ix) between these obtained measurements identify the measurement of said zone (I) of the article;
(x) multiply this inner diameter measurement by a corrective function f(x);
(xi) Evaluate the final inner diameter measurement as a result of step (x).

10. The method according to claim 9 wherein said step (iv') enlarges the dynamic range of the image in order to equalise the brightness levels along the X-axis to compensate for the decrease in intensity in depth of the light in the inner area filled of the diffusive medium.

11. The method according to claims 9 and 10 wherein this corrective function is an inverse compensation function to the wall measurement as a function of depth in the X-axis.

12. A production line for hollow glass articles having a longitudinal extension along a longitudinal axis X comprising a first filling station (5) wherein said article is filled with a diffusive medium, an extraction station (7) of said diffusive medium and an intermediate measuring station (6) comprising at least the following elements for implementing the method set forth in claims 1 to 11:
- means of emission of two-dimensional light radiation defined on a plane (XY') to externally illuminate said article highlighting the edges;
- image acquisition means placed beyond said article with respect to said two-dimensional emission means, said image acquisition means being such as to acquire an image of said article on said plane (XY');
- means of emitting a one-dimensional light radiation placed at a neck and/or a bottom of said article and such as to illuminate the interior of said article;
- means of image processing configured to at least carry out the step iv to viii of claim 1.

13. The production line according to the preceding claim wherein said measuring station also includes means for rotating said hollow article about said longitudinal axis (X).

14. The production line according to claim 12 wherein said measuring station comprises a plurality of image acquisition means facing as many means for emitting a two-dimensional light radiation placed on respective longitudinal planes XY', XY", XY"...XYn defined on different angles with respect to the longitudinal axis X, wherein each of said means of acquisition detects the image of the article on a respective longitudinal plane XY', XY", XY"...XYn.

## Patentansprüche

1. Verfahren zum Messen der Dicke eines Hohlglasartikels, wobei der Artikel eine Abwicklung entlang einer ersten Längsachse (X) aufweist und ein Fach (10) umfasst, das durch eine Glaswand einer zu messenden Dicke (S) begrenzt ist, eine Öffnung (12) für einen Zugang zu dem Fach (10) und einen Boden (13) gegenüber der Öffnung, wobei die Dicke entlang einer Achse senkrecht zu der Längsachse (X) gemessen wird, das Verfahren umfassend die Schritte:
i. Einbringen eines Mediums, das zu der Lichtstrahlung im Inneren dieses Fachs (10) diffusiv ist;
ii. Emittieren einer im Wesentlichen eindimensionalen Lichtstrahlung entlang der Achse (X), um die Kammer (10), die mit dem diffusiven Medium gefüllt ist, durch einen Boden (13) des Artikels und/oder eine Öffnung (12) des Artikels hindurch von innen zu beleuchten;
iii. Emittieren einer zweidimensionalen Lichtstrahlung in einer Längsebene (XY oder XZ) relativ zu dem Hohlglasartikel, um den Artikel von außen zu beleuchten, was die Kanten hervorhebt;
das Verfahren umfassend die Schritte:
iv. Erfassen mindestens eines Bilds in der Längsebene (XY oder XZ) des Artikels mittels Bilderfassungsmitteln, die vor und auf der gegenüberliegenden Seite der Flasche zu der Emissionsrichtung der zweidimensionalen Lichtstrahlung platziert sind;
v. auf dem Bild, um Zonen gemäß ihrer Helligkeit zu unterteilen;
vi. Identifizieren dieser Zonen auf der Grundlage ihrer Helligkeit, beispielsweise mindestens einer Zone (G), die dem Glas entspricht, und mindestens einer Zwischenzone (I) zwischen zwei Zonen (G), die dem Fach (10) entspricht;
vii. Quantifizieren der Anzahl von Pixeln, die in mindestens einer der Zonen (G) und (I) vorhanden ist;
viii. Bewerten der Größen mindestens einer dieser Zonen basierend auf der Anzahl von quantifizierten Pixeln und Wissen der Auflösung des erfassten Bilds.

2. Verfahren nach Anspruch 1, wobei die eindimensionale Lichtstrahlung in einer Richtung emittiert wird, die im Wesentlichen senkrecht zu der Rahmenrichtung der Bilderfassungsmittel ist.

3. Verfahren nach Anspruch 1 oder 2, wobei die eindimensionale Lichtstrahlung mit Leuchtdioden für inkohärentes Licht (LED) oder kohärentes Licht (LASER) erzeugt wird.

4. Verfahren nach Anspruch 1, 2 oder 3, wobei die zweidimensionale externe Strahlung entweder diffus oder kollimiert ist.

5. Verfahren nach Anspruch 1, 2 oder 3, wobei die zweidimensionale externe Strahlung Strahlung ist, die durch Reflexion der eindimensionalen Lichtstrahlung von einer reflektierenden Platte emittiert wird.

6. Verfahren nach einem der vorstehenden Ansprüche, wobei das Verfahren ferner den Schritt des Erfassens einer Vielzahl von Bildern des Artikels in ebenso vielen Ebenen (XY") bei unterschiedlichen Drehwinkeln umfasst.

7. Verfahren nach Anspruch 6, wobei das Verfahren für jedes der Vielzahl von erfassten Bildern den Schritt des Messens der Dicke auf der Grundlage eines Erkennens von Pixeln unterschiedlicher Helligkeitszonen umfasst.

8. Verfahren nach Anspruch 7, wobei dieses Verfahren ebenso den Schritt des Bewertens dieser erhaltenen Werte auf der Grundlage eines definierten Bereichs zwischen zwei Grenzwerten und Aussortierens von Artikeln, für die Werte außerhalb dieses Bereichs erkannt wurden, einschließt.

9. Verfahren nach Anspruch 1, wobei zwischen Schritt (iv) und Schritt (v) ebenso eingeschlossen ist:
(iv') Bildverarbeiten
und nach Schritt (viii) Vorsehen der Schritte:
(ix) zwischen diesen erhaltenen Messungen, Identifizieren der Messung der Zone (I) des Artikels;
(x) Multiplizieren dieses Innendurchmessers durch eine Korrekturfunktion f(x);
(xi) Bewerten der endgültigen Innendurchmessermessung als ein Ergebnis von Schritt (x).

10. Verfahren nach Anspruch 9, wobei der Schritt (iv') den Dynamikbereich des Bilds vergrößert, um die Helligkeitspegel entlang der X-Achse anzugleichen und die Abnahme einer Intensität des Lichts in einer Tiefe in dem inneren Bereich zu kompensieren, der mit dem diffusiven Medium gefüllt ist.

11. Verfahren nach den Ansprüchen 9 und 10, wobei diese Korrekturfunktion eine inverse Kompensationsfunktion zu der Wandmessung als eine Funktion der Tiefe in der X-Achse ist.

12. Produktionslinie für Hohlglasartikel, die eine Längserstreckung entlang einer Längsachse X aufweisen, umfassend eine erste Füllstation (5), in der der Artikel mit einem diffusiven Medium gefüllt wird, eine Extraktionsstation (7) des diffusiven Mediums und eine Zwischenmessstation (6), umfassend mindestens die folgenden Elemente zum Implementieren des Verfahrens, das in den Ansprüchen 1 bis 11 dargelegt wird:
- Mittel für eine Emission einer zweidimensionalen Lichtstrahlung, die auf einer Ebene (XY') definiert sind, um den Artikel von außen zu beleuchten, was die Kanten hervorhebt;
- Bilderfassungsmittel, die hinsichtlich der zweidimensionalen Emissionsmittel hinter dem Artikel platziert sind, wobei Bilderfassungsmittel derart ausgelegt sind, um ein Bild des Artikels auf der Ebene (XY') zu erfassen;
- Mittel zum Emittieren einer eindimensionalen Lichtstrahlung, die an einem Hals und/oder einem Boden des Artikels platziert sind und derart, um das Innere des Artikels zu beleuchten;
- Mittel für eine Bildverarbeitung, die konfiguriert sind, um mindestens die Schritte iv bis viii von Anspruch 1 auszuführen.

13. Produktionslinie nach dem vorstehenden Anspruch, wobei die Messstation ebenso Mittel zum Drehen des Hohlartikels um die Längsachse (X) herum einschließt.

14. Produktionslinie nach Anspruch 12, wobei die Messstation eine Vielzahl von Bilderfassungsmitteln umfasst, die ebenso vielen Mitteln zum Emittieren einer zweidimensionalen Lichtstrahlung zugewandt sind, die auf jeweiligen Längsebenen XY', XY", XY" ...XYn platziert sind, die in unterschiedlichen Winkeln hinsichtlich der Längsachse X definiert sind, wobei jedes der Erfassungsmittel das Bild des Artikels auf einer jeweiligen Längsebene XY', XY", XY" ...XYn erfasst.

## Revendications

1. Procédé de mesure de l'épaisseur d'un article en verre creux, dans lequel ledit article a un développement le long d'un premier axe longitudinal (X) et comprend un compartiment (10) délimité par une paroi en verre d'une épaisseur (S) à mesurer, une ouverture (12) pour un accès audit compartiment (10) et un fond (13) opposé à ladite ouverture, dans lequel ladite épaisseur est évaluée le long d'un axe perpendiculaire audit axe longitudinal (X), ledit procédé comprenant les étapes consistant à :
i. insérer un milieu diffusant le rayonnement lumineux à l'intérieur de ce compartiment (10) ;
ii. émettre un rayonnement lumineux sensiblement unidimensionnel le long de l'axe (X) pour éclairer intérieurement ladite chambre (10) remplie dudit milieu diffusant à travers un fond (13) dudit article et/ou une ouverture (12) dudit article ;
iii. émettre un rayonnement lumineux bidimensionnel dans un plan longitudinal (XY ou XZ) par rapport à l'article en verre creux afin d'éclairer extérieurement ledit article en mettant en évidence les bords ;
ledit procédé comprenant les étapes suivantes consistant à :
iv. acquérir au moins une image dans ledit plan longitudinal (XY ou XZ) dudit article au moyen de moyens d'acquisition d'images placés à l'avant et sur le côté opposé de ladite bouteille par rapport à la direction d'émission dudit rayonnement lumineux bidimensionnel ;
v. sur ladite image, subdiviser les zones en fonction de leur luminosité ;
vi. identifier ces zones sur la base de leur luminosité, telle qu'au moins une zone (G) correspondant au verre et au moins une zone intermédiaire (I) entre deux zones (G), correspondant audit compartiment (10) ;
vii. quantifier le nombre de pixels présents dans au moins une desdites zones (G) et (I) ;
viii. évaluer la taille d'au moins une de ces zones sur la base du nombre de pixels quantifié et en connaissant la résolution de l'image acquise.

2. Procédé selon la revendication 1, dans lequel ledit rayonnement lumineux unidimensionnel est émis dans une direction sensiblement perpendiculaire à la direction de cadrage desdits moyens d'acquisition d'images.

3. Procédé selon la revendication 1 ou 2, dans lequel le rayonnement lumineux unidimensionnel est généré par des diodes électroluminescentes à lumière incohérente (DEL) ou par de la lumière cohérente (LASER).

4. Procédé selon la revendication 1, 2 ou 3, dans lequel ledit rayonnement externe bidimensionnel est soit diffus, soit collimaté.

5. Procédé selon la revendication 1, 2 ou 3, dans lequel ledit rayonnement externe bidimensionnel est un rayonnement émis par réflexion sur un panneau réfléchissant dudit rayonnement lumineux unidimensionnel.

6. Procédé selon l'une quelconque des revendications précédentes, dans lequel ledit procédé comprend en outre l'étape d'acquisition d'une pluralité d'images de l'article dans autant de plans (XY") à différents angles de rotation.

7. Procédé selon la revendication 6, dans lequel, pour chacune de ladite pluralité d'images acquises, ledit procédé comprend l'étape de mesure de l'épaisseur sur la base de la détection de pixels de zones de luminosité différente.

8. Procédé selon la revendication 7, dans lequel ce procédé comprend également l'étape d'évaluation de ces valeurs obtenues sur la base d'une plage définie entre deux valeurs limites et d'élimination des articles pour lesquels des valeurs en dehors de cette plage sont détectées.

9. Procédé selon la revendication 1, dans lequel, entre l'étape (iv) et l'étape (v) est également incluse :
(iv') une étape de traitement d'image
et après l'étape (viii) sont prévues les étapes consistant à :
(ix) entre ces mesures obtenues, identifier la mesure de ladite zone (I) de l'article ;
(x) multiplier cette mesure de diamètre intérieur par une fonction corrective f(x) ;
(xi) évaluer la mesure finale du diamètre intérieur comme résultat de l'étape (x).

10. Procédé selon la revendication 9, dans lequel ladite étape (iv') élargit la plage dynamique de l'image afin d'égaliser les niveaux de luminosité le long de l'axe X pour compenser la diminution de l'intensité de la lumière en profondeur dans la zone intérieure remplie du milieu diffusant.

11. Procédé selon les revendications 9 et 10, dans lequel cette fonction corrective est une fonction de compensation inverse de la mesure de la paroi en fonction de la profondeur dans l'axe X.

12. Ligne de production d'articles en verre creux ayant une extension longitudinale le long d'un axe longitudinal X comprenant un premier poste de remplissage (5) dans laquelle ledit article est rempli d'un milieu diffusant, un poste d'extraction (7) dudit milieu diffusant et un poste de mesure intermédiaire (6) comprenant au moins les éléments suivants pour la mise en œuvre du procédé selon les revendications 1 à 11 :
- des moyens d'émission d'un rayonnement lumineux bidimensionnel défini sur un plan (XY') pour éclairer extérieurement ledit article en mettant en évidence les bords ;
- des moyens d'acquisition d'images placés au-delà dudit article par rapport aux moyens d'émission bidimensionnels, lesdits moyens d'acquisition d'images étant tels qu'ils acquièrent une image dudit article sur ledit plan (XY') ;
- des moyens d'émission d'un rayonnement lumineux unidimensionnel placés au niveau d'un goulot et/ou d'un fond dudit article et de manière à éclairer l'intérieur dudit l'article ;
- des moyens de traitement d'image configurés pour au moins réaliser les étapes iv à viii selon la revendication 1.

13. Ligne de production selon la revendication précédente, dans laquelle ledit poste de mesure comporte également des moyens pour faire tourner ledit article creux autour dudit axe longitudinal (X).

14. Ligne de production selon la revendication 12, dans laquelle ledit poste de mesure comprend une pluralité de moyens d'acquisition d'images faisant face à autant de moyens d'émission d'un rayonnement lumineux bidimensionnel placés sur des plans longitudinaux respectifs XY', XY", XY"...XYn définis à des angles différents par rapport à l'axe longitudinal X, dans laquelle chacun desdits moyens d'acquisition détecte l'image de l'article sur un plan longitudinal respectif XY', XY", XY"...XYn.
